(19) Europäisches Patentamt
European Patent Office
Office européen des brevets

(11) **EP 2 653 722 B1**

(12) **EUROPEAN PATENT SPECIFICATION**

(45) Date of publication and mention
of the grant of the patent:
**15.07.2020 Bulletin 2020/29**

(21) Application number: **12164476.9**

(22) Date of filing: **17.04.2012**

(51) Int Cl.:
*F03D 7/02* (2006.01)          *G01P 5/165* (2006.01)
*G01P 13/02* (2006.01)

(54) **Yaw error sensor, wind turbine and yaw angle adjustment**

Gierfehlersensor, Windturbine und Gierwinkeleinstellung

Détecteur d'erreur de lacet, éolienne et réglage d'angle de lacet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.10.2013 Bulletin 2013/43**

(73) Proprietor: **Siemens Gamesa Renewable Energy
A/S
7330 Brande (DK)**

(72) Inventors:
• **Andersen, Jimmi
7500 Holstebro (DK)**

• **Christiansen, Per Moelhave
7430 Ikast (DK)**
• **Rieper, Johnny
8700 Horsens (DK)**

(74) Representative: **Aspacher, Karl-Georg et al
Siemens Aktiengesellschaft
Postfach 22 16 34
80506 München (DE)**

(56) References cited:
**EP-A1- 1 288 494     EP-A1- 1 559 910
EP-A2- 2 048 507     WO-A1-2005/093435
US-A- 5 099 686**

**Description**

The invention describes a yaw error detection sensor, a wind turbine of a horizontal axis type comprising a sensor and a method for adjusting a yaw angle of a wind turbine. The invention further describes use of a pitot tube for detecting a yaw angle error.

Wind turbines are largely used to generate electrical energy. For best efficiency it is important that the nacelle of the wind turbine and the hub of the wind turbine are directed in the direction of the wind. It is known to use controller actuators to turn around the nacelle of the wind turbine together with the rotor of the turbine to adjust for an optimal yaw position. An optimal yaw position of the turbine will optimise power production. The power loss due to a yaw error is about $1-\cos\alpha^2$, where $\alpha$ is the yaw error. This means that 10° of yaw error may result in 1.5% power loss. An optimal yaw position of the turbine will further reduce a load on the blades.

It is known to measure the wind direction with a wind direction sensor, for example a wind vane, at one point on the nacelle located behind the rotor. A problem with measuring the wind direction on top of the nacelle is the swirl created by the rotor. The swirl causes errors in the wind direction measurement. In addition to the inaccuracy due to the swirl, the pitch angle and nacelle geometry have an impact on the measured wind direction. EP 1 559 910 A1 attempts to compensate for the turbulence behind the rotor plane by using two cup anemometers, one on each side of the nacelle. Other approaches to the problem consider locating various types of sensors in front of the rotor plane. For example, EP 2 048 507 A2 uses a number of sensors such as propeller anemometers, sonic anemometers, or pressure anemometers mounted on a boom (that can be up to 10 m in length) extending outward from the nosecone or hub of the wind turbine. WO 2005/093435 A1 considers using several 1D sonic sensors arranged at the front of the hub to measure the surface pressure, and also suggests using a pressure sensor mounted on a boom to measure the atmospheric pressure at a distance outward from the hub. EP 1 288 494 A1 describes a complicated hub mounting arrangement for a sensor apparatus comprising three pitot tube sensors, so that the apparatus itself remains stationary while the hub rotates. However, the known arrangements are relatively complex in their construction, and often comprise components such as propellers or long booms that are prone to damage or failure, so that many of the known solutions are also quite unreliable.

It is therefore an object of the invention to provide a yaw error detection sensor with an improved accuracy.

The object of the invention is achieved by a yaw error detection sensor according to claim 1, and by the wind turbine of claim 10. The object of the invention is further achieved by a method for adjusting a yaw angle of the wind turbine according to claim 12.

The invention provides a yaw error detection sensor which is adapted to be mounted to a front side of a hub of a wind turbine of a horizontal axis type. The sensor mounted at the front side of the hub can measure a wind velocity and/or a stagnation pressure without being hindered by the swirl produced by the rotor blades. The mounted sensor is adapted to measure a stagnation pressure or/and a wind velocity at two different positions along a horizontal plane of the hub and is characterized in that the yaw error detection sensor comprises a pitot tube with a stagnation pressure port and a dynamic pressure port situated at a side of the pitot tube. By measuring at two different positions, the wind direction can be determined out of the wind velocities or the stagnation pressures measured.

A wind turbine will have the same wind velocity at both positions of the yaw error detection sensor if the hub of the wind turbine is directed with the optimal yaw angle into the wind direction. The two measurement points may be arranged symmetrically to the axis of the wind turbine in a horizontal plane. When a yaw error occurs, the wind velocity or/and the stagnation pressure will be higher at one of the two measurement points. Then the nacelle must be turned into the direction of this measurement point to correct the yaw error. An unsymmetrical arrangement may be used as well. In this case, a difference in wind velocity and/or stagnation pressure between the two measurement points will be measured even when the yaw error is zero. This difference may be compensated by a calibration.

The invention further provides a wind turbine of a horizontal axis type including a sensor according to the invention. In other words, the sensor is mounted to the hub of the wind turbine capable of measuring the stagnation pressure or/and a wind velocity at two different measurement points along a horizontal plane of the hub.

A method is provided for adjusting a yaw angle of a nacelle of a wind turbine. The inventive method comprises a step of measuring a first stagnation pressure or/and a first wind velocity at a first position of a front side of a hub, whereby the stagnation pressure and wind velocity are measured using a yaw error detection sensor comprising a pitot tube with a stagnation pressure port and a dynamic pressure port situated at a side of the pitot tube.

In a next step a second stagnation pressure or/and a second wind velocity is measured in a second position different from the first position at the front side of the hub. The first and second positions are preferably at a same horizontal plane of the hub. They are arranged symmetrically to the axis of rotation of the hub. In the following step the yaw angle is adjusted if a difference between the first and the second stagnation pressure or/and wind velocity is detected. Therefore, a nacelle of the wind turbine is turned in the direction towards the position of the higher stagnation pressure or/and wind velocity.

Particularly advantageous embodiments and features of the invention are given by the dependent claims, as revealed in the following description. Features described in the context of one claim category can apply equally to another claim category unless the contrary is explicitly stated.

Pitot tubes are known for measuring fluid velocity by converting kinetic energy of a flow into potential energy. They can be mounted at the front side of a hub of a wind turbine. They allow measurement of stagnation pressures as well as measurement of a wind velocity.

As indicated above, the yaw error detection sensor comprises a pitot tube mounted to measure while a rotor of the wind turbine is rotating. If the pitot tube is mounted somewhat apart of the rotor axis, the stagnation pressures and/or a wind velocity may be measured sequentially at the two different positions. For example, the first measurement is taken when the mounted pitot tube is at an angle of 90° azimuth and a second measurement is taken when the pitot tube is at an angle of 270° azimuth, or in other words, when the rotor has effectuated half a turn round. Advantageously, only one pitot tube adapted to measure one velocity or one stagnation pressure is necessary to measure at two different points. The yaw error may be measured during operation of the wind turbine allowing for a quick correction of a detected yaw error.

In another embodiment, the mounted pitot tube is adapted to measure at the two different positions during a standstill of the wind turbine. The pitot tube may be mounted centrally on the hub in line with the rotor axis and be provided with two measurement points. In this embodiment, it is possible to correct a yaw error before operating the wind turbine. It is also possible in this embodiment to measure sequentially during operation of the wind turbine in the same way as described above with reference to the previous embodiment.

In a further embodiment, the sensor includes an evaluation unit which is adapted to calculate a yaw error out of a comparison of the measured stagnation pressures or/and wind speeds at the two different positions along a horizontal plane of the hub. Correcting a yaw error does not necessitate to calculate the yaw error itself. It is sufficient to know whether there is a difference in the measured velocities and/or the measured stagnation pressures. Advantageously, with the yaw error calculated, a yaw actuator may be controlled to adjust the position of the nacelle of the wind turbine exactly. Otherwise, an incremental approach to the correct yaw angle is possible. In an incremental approach the position of the nacelle is adjusted by a predefined angle in the direction indicated by the measurement. A following measurement will then show whether the adjustment was sufficient or whether a further adjustment is necessary.

In an embodiment, the pitot tube comprises a single stagnation pressure port and a single dynamic pressure port. In this embodiment, a very simple pitot tube may be used comprising only two ports. Although only one stagnation pressure port and one dynamic pressure port are provided, a sequential measurement allows to measure at two different positions on a horizontal plane, provided that the rotor is rotating.

In a further embodiment, the pitot tube comprises a single stagnation pressure port and at least two dynamic pressure ports situated at opposite sides of the pitot tube. Then, the first difference between the stagnation pressure measured at the single stagnation pressure port and a first dynamic pressure measured at one of the two dynamic pressure ports will be compared to a difference between the stagnation pressure measured at the single stagnation pressure port and the second dynamic pressure measured at the second of the two dynamic pressure ports. If the two differences are equal, the nacelle is at the optimal yaw angle, otherwise, the nacelle must be turned towards the dynamic pressure port where the difference is greater.

In a preferred embodiment, the pitot tube comprises two stagnation pressure ports which are arranged on differently inclined surfaces of a front end of the pitot tube. The pitot tube further comprises two dynamic pressure ports which are situated at opposite sides of the pitot tube. The differently inclined surfaces will lead to a difference in the stagnation pressure at the two stagnation pressure ports dependent on the wind direction. A comparison of the two stagnation pressures is sufficient to detect the yaw error. It is thus not necessary to measure the dynamic pressure. Furthermore, it is possible to increase the accuracy of measurement using the difference between stagnation pressure and dynamic pressure as well as the difference between the two stagnation pressures.

Advantageously, the differently inclined surfaces are inclined by an angle of about 1 to 10° to a plane, which is perpendicular to the rotor axis. With an angle of about 1 to 10° preferably at about 5°, there is still a stagnation point provided at the stagnation pressure ports but the dynamic component is already important leading to a more important difference between the stagnation pressures measured when there is a yaw error. A stagnation pressure difference between the two ports indicates that the nacelle of the wind turbine is not directed correctly to face the wind.

In a preferred embodiment, the pitot tube comprises three stagnation pressure ports. One of the stagnation pressure ports is preferably situated in the center of a front face of the pitot tube and the two other stagnation pressure ports are arranged on differently inclined surfaces of the front face of the pitot tube. The pitot tube further preferably comprises two dynamic pressure ports which are situated at opposite sides of the pitot tube.

It is an advantage of the increased number of ports that the measurement accuracy can be enhanced. The first possibility of measurement is to take a first difference between the stagnation pressure measured at the port situated in the middle, i.e. the centre, of the pitot tube and the stagnation pressure measured at one of the stagnation pressure ports arranged on inclined surfaces and to compare this to a second difference taken between the stagnation pressure measured at the stagnation pressure port situated in the middle of the front face of the pitot tube and the stagnation pressure measured at the other one of the stagnation pressure ports arranged on inclined surfaces. The nacelle must then be turned towards the stagnation pressure port where the difference is greater. It is further possible to measure the difference between the stagnation pressure and the dynamic pressure measured at the dynamic pressure ports. When knowing the local value of air density from pressure and temperature measurements the Bernoulli's equation can be applied:

$$PC = P_{static} + PD \qquad\qquad (1)$$

wherein

PC is the total or stagnation pressure,
$P_{static}$ is the static pressure, and
PD is the dynamic pressure.

The dynamic pressure PD may be expressed by the velocity $v_{PC}$:

$$PC = P_{static} + 0.5 \cdot \rho \cdot v_{PC}{}^2 \qquad\qquad (2)$$

wherein
$\rho$ is the air density.
Solving equation (2) for the velocity:

$$v_{PC} = \sqrt{\frac{2 \cdot (PC - P_{static})}{\rho}} \qquad\qquad (3)$$

Hence the yaw error may also be determined based on wind speed comparison between the different stagnation ports.
Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig. 1 shows a schematic representation of a wind turbine according to the prior art;

Fig. 2 shows a schematic top view of a wind turbine according to the invention;

Fig. 3 shows a schematic longitudinal section of a pitot tube for use in a first embodiment of the invention;

Fig. 4 shows a schematic longitudinal section of a pitot tube for use in a second embodiment of the invention;

Fig. 5 shows a schematic longitudinal section of a pitot tube for use in a third embodiment of the invention;

Fig. 6 shows a schematic longitudinal section of a pitot tube for use in a fourth embodiment of the invention;

Fig. 7 shows steps of a method according an embodiment of the invention in a schematic diagram.

In the drawings, like reference numbers refer to like objects throughout. Objects in the diagrams are not necessarily drawn to scale.

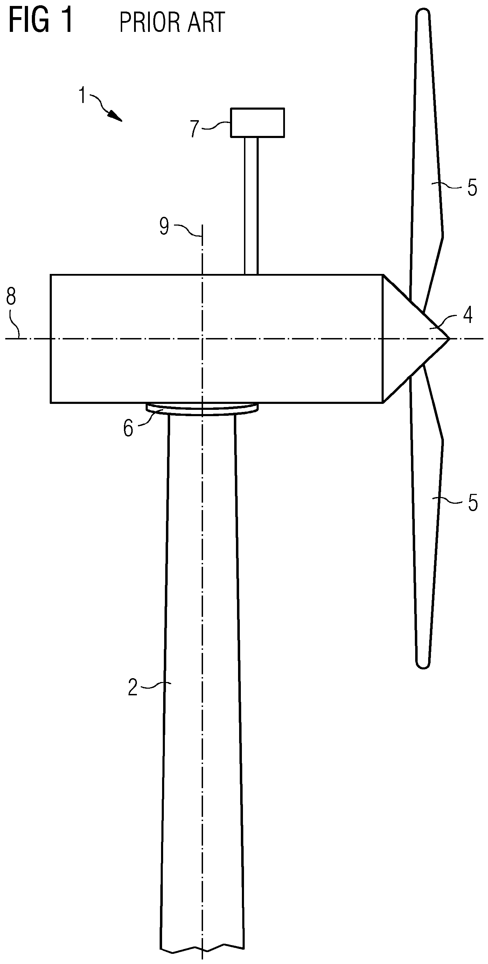

Fig. 1 shows a schematic view of a conventional wind turbine 1. A nacelle 3 is mounted on a tower 2. Between nacelle 3 and tower 2 there is installed a yaw system 6. Yaw system 6 allows turning nacelle 3 around an axis 9 which is the longitudinal axis of tower 2. In other words, the yaw system 6 allows turning nacelle 3 along a horizontal plane. At one front end of nacelle 3 is a hub 4. Blades 5 forming a rotor are attached to hub 4. The front end of the hub 4 is also called a spinner and may be realized as a separate part. In Fig. 1 the front end of the hub or the spinner has a cone like form. In the following, no difference will be made between a spinner and the front end of the hub. The nacelle 3 is turned around by the yaw system 6 so that the hub faces towards the wind direction.

Usually, a wind turbine comprises two or three blades 5 forming the rotor together with the hub 4. Wind turbine 1 is of a horizontal type with a horizontal axis 8 which is the rotation axis of the rotor. On top of nacelle 3 a wind direction sensor 7 is mounted. The wind direction is usually measured with wind direction sensor 7 comprising a wind vane. Another kind of wind sensor may be used instead. It is a disadvantage that the wind direction sensor 7 is mounted on the nacelle 3 behind the rotor. The measurement is effected by the swirl formed by the rotor. The introduced inaccuracy due to the swirl leads to misalignments and in consequence to a loss in power production.

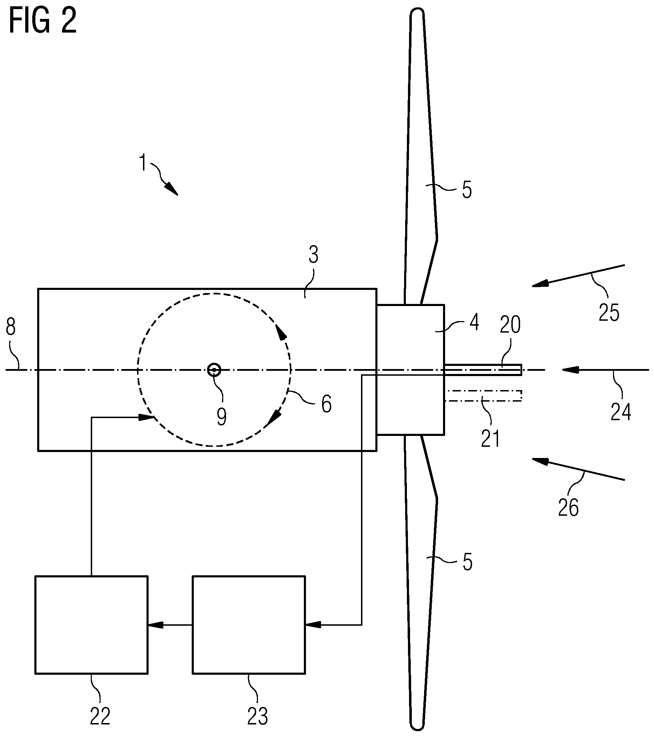

Fig. 2 shows in a schematic top view a wind turbine according to an embodiment of the invention. A hub 4 bearing blades 5 is arranged at a front end of a nacelle 3. The rotor formed by blades 5 and hub 4 turns around a horizontal axis 8. Nacelle 3 may be turned around an axis 9 by a yaw system 6. The front end of hub 4 in Fig. 2 is shown as being flat. This is not to be understood as limiting. The front end of the hub, which may be called as well the spinner, may also have another form, for example being cone like as shown in Fig. 1.

A pitot tube 20 is mounted at a front end of the hub 4. Pitot tube 20 is mounted centrally on the front end. Pitot tube 20 is adapted to measure a stagnation pressure or a wind velocity at two different positions along a horizontal plane of the hub. It is also possible that pitot tube 20 is adapted to measure a stagnation pressure and a wind velocity. Data measured by pitot tube 20 are transmitted to an evaluation unit 23. The evaluation unit 23 may be adapted to calculate a yaw error out of a comparison of the measured stagnation pressures or/and wind speeds at the two different positions along a horizontal plane of the hub.

Evaluation unit 23 is connected to a control unit 22, which is connected to the yaw system 6. Evaluation unit 23 and control unit 22 are only schematically indicated. They may be placed in the hub 4, the nacelle 3 or anywhere else in the wind turbine or near the wind turbine. They may be integrated into a main computer or running as a separate system which supplies a signal to the main computer.

Instead or also in addition of pitot tube 20 it is also possible to mount a pitot tube 21 which is mounted off the centre of hub 4, i.e. away from the axis 8 at the front side of the hub 4. The difference between a placement as shown for pitot tube 20 and a placement as shown for pitot tube 21 is that pitot tube 20 will only measure oncoming wind. In contrast, pitot tube 21 will register a resultant wind direction affected by a tangential wind speed which is dependent on rotor speed. This may not be a problem for small distances from the centre as the tangential wind speed is dependent on the radius length. The placement will further depend on how the front end of the hub 4 is shaped as this impacts the wind distribution on the front end of hub 4. For example, some areas of the front end or spinner may have accelerated wind speeds and other places are stagnation points. With a simulation of the fluid dynamics using for example CFD (computational fluid dynamics) for the front end of the hub on which the pitot tube is to be placed, it is possible to determine a best suited mounting place which has neither accelerated wind speeds nor lies at a stagnation point.

Arrows 24, 25 and 26 indicate different possible wind directions. When the wind is blowing as indicated by arrow 24, i.e. directly along the axis 8 in the position of the nacelle 3 depicted in this figure, there is no yaw error. Nacelle 3 of the wind turbine is perfectly directed into the wind and power production is optimised. The wind turbine orientation is optimal.

When the wind is blowing as indicated by arrow 25, there is a yaw error. Yaw system 6 must turn nacelle 3 counterclockwise in a horizontal plane as shown in Fig. 2. Pitot tube 20, which is adapted to measure at two different positions, will measure a higher stagnation pressure on the side towards arrow 25 and a lower pressure at the second position which in Fig. 2 is nearer arrow 26. Pitot tube 21 will measure a higher stagnation pressure when on the side towards arrow 25 and a lower pressure when on the side towards arrow 26. Evaluation unit 23 will evaluate the difference and give a command to control unit 22. Control unit 22 will control the yaw system 6 to turn nacelle 3 counterclockwise.

There are at least two possible embodiments. Firstly, evaluation unit 23 may be adapted to calculate the yaw angle error and the control unit 22 may then be adapted to adjust the direction of nacelle 3 by the angle calculated.

In a preferred second embodiment, evaluation unit 23 is adapted to evaluate to which side nacelle 3 must be turned for minimising the error. It is not necessary to evaluate exactly the yaw angle. Then, control unit 22 is adapted to turn nacelle 3 about a small fixed angle. Pitot tubes 20, 21 continue to measure and adjustment to the best yaw angle will continue. The optimal position is found by an iterative process.

In the case of pitot tube 21 some compensation will be required, for example bias compensation as a function of the rotational speed and azimuth. Bias compensation is to be understood as indicating an additional pressure which results from placing the sensor off centre. When the sensor is placed off centre a tangential velocity is additionally measured which might be negligible with pitot tube 20.

The tangential velocity can be calculated to

$$V_{tan} = \omega\, r$$

With r the distance from the centre and ω the angular speed. The additional pressure is proportional to rotational speed and can thus be compensated by calibration and proper gain settings. Post processing might be necessary using azimuth binning as explained hereinafter.

The pressure measurement values are a periodic signal with a frequency of 1P. P means "per rotation". It is periodic because after a complete rotation, the pitot tube 21 will re-measure at the same azimuth angle. The periodic signal may be a sine or any other periodic signal. By dividing measurements into bins of certain azimuth intervals, it is possible to estimate the amplitude and phase of the periodic signal. This requires sampling around the azimuth e.g. 64 samples per rotation.

As an example a sine signal regression will be explained.

The measured signal is par example divided into twelve azimuth bins of 0-30, 30-60, 60-90, ... ,330-360 degrees, after which the average of each bin is calculated. Then the average of all bins is subtracted from the individual bin averages, thus eliminating the bias or DC content. The amplitude of the binned yaw actuator signals is then determined as the square root of two times the standard deviation of all bins. A sum of squares cost function is used to align the binned signal and a sine based on the estimated amplitude and 1P frequency, yielding the phase offset value.

The amplitude and phase are linked to the yaw error by some transfer function. The transfer function may be derived analytically or by empirical test where the turbine is exposed to several known yaw errors. The amplitude and phase may also be determined by a DFT (discrete fourier transformation) method, e.g. the Goertzel algorithm or by FFT (fast fourier transformation) methods for phase and magnitude estimation in order to extract the yaw error. The tangential wind component will be the more important the more the pitot tube is placed off centre.

For all measurements it is to be understood that preferably averages are taken. Usually, one rotation of the rotor takes about 4 seconds. Measuring sequentially and taking estimates - or averaged measures - every 30 seconds or may be also every 10 minutes are sufficient to determine a yaw angle error. Typically, a turbine does not yaw more than around 10-15% of the production time so there is time to do some averaging. Longer averages of 10 min are also interesting in order to determine a static yaw error when used with a wind vane. A wind vane behind the rotor usually has a constant yaw error due to the rotor swirl. Of course, other temporal steps are possible. Consecutive rotations may be selected or measurements will be spaced by a predefined rotation angle.

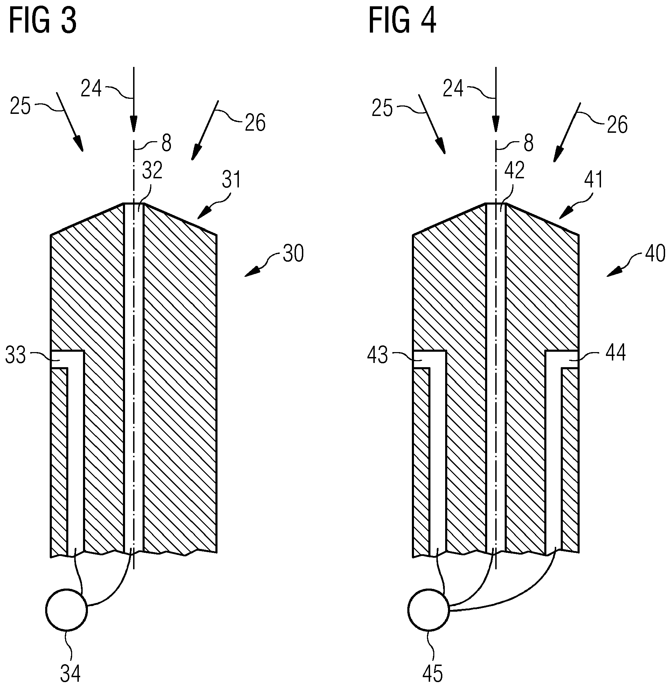

With reference to Figs. 3 to 6 different pitot tubes which may be used with a wind turbine according to embodiments of the invention will be discussed in detail.

Fig. 3 shows a longitudinal section of a first embodiment of a pitot tube 30. Pitot tube 30 comprises a single stagnation pressure port 32 and a single dynamic pressure port 33. For measuring the pressures at ports 32 and 33, pitot tube 30 comprises a manometer 34 to which ports 32 and 33 are connected. Manometer 34 is only indicated very schematically as this is known for conventional pitot tubes and a general function of pitot tubes will not be explained in detail.

Stagnation pressure port 32 is situated at a front end of pitot tube 30. Dynamic pressure port 33 is situated at a side face of pitot tube 30. Ports 32 and 33 are attached to manometer 34 by tubes. Although the remaining part of the pitot tube is shown as being massive this is not necessarily the case. Any pitot tube construction is possible as long as it is possible to measure at port 32 a stagnation pressure and at port 33 a dynamic pressure.

As in Fig. 2, three arrows 24, 25 and 26 indicate possible wind directions when pitot tube 30 is mounted at the position of pitot tube 21 in Fig. 2. When the rotor of wind turbine 1 is rotating, a first stagnation pressure or a first wind velocity may be measured at an angle of 90° azimuth. A second stagnation pressure or a second wind velocity may be measured a little bit later at an angle of 270° azimuth. A little bit later means after the rotor has turned about 180° or about 180° plus a number of complete rotations. Pitot tube 30 may not be used mounted in the centre of the rotor at a position of pitot tube 20 in Fig. 2.

An evaluation unit 23 may calculate the difference of the stagnation pressures or the wind velocities measured at the two different positions and output an actuation signal to a control unit 22.

Fig. 4 shows a longitudinal section of a pitot tube 40 according to a second embodiment. As explained with reference to pitot tube 30 it is not necessary that pitot tube 40 is constructed massively as shown in the section. Pitot tube 40 comprises a single stagnation pressure port 42 and two dynamic pressure ports 43 and 44. All three ports 42, 43, 44 are connected to a manometer 45 by tubes.

Pitot tube 40 may be mounted at a position as pitot tube 20 in the centre of a hub or at the position of pitot tube 21 in Fig. 2, i.e. off centre. Stagnation pressure port 42 is situated at a front end of pitot tube 40. Dynamic pressure port 43 is situated at a side of pitot tube 40. Dynamic pressure port 44 is situated at a side of pitot tube 40 opposite port 43. An opposite side means on the other side of the central axis 8. Port 44 may be situated symmetrically to port 43 with respect to the middle axis 8 of the pitot tube 40.

As in Figs. 2 and 3, three arrows 24, 25 and 26 indicate possible wind directions. Pitot tube 40 allows measuring a stagnation pressure at the single port 42 and the dynamic pressure at each side of the tube at ports 43 and 44. Thus, two static measures may be taken:

$$P_{static,left} = PC - PD_{left}$$

and

$$P_{static,right} = PC - PD_{right}$$

Wherein PC is the total or stagnation pressure measured at port 42, $PD_{left}$ is the dynamic pressure measured on a left side, for example at port 43, and $PD_{right}$ is the dynamic pressure measured on a right side, for example at port 44. $P_{static,\ left}$ is then the static pressure which may be calculated as being the difference between the stagnation pressure and the dynamic pressure on the left. $P_{static,\ right}$ is then the static pressure which may be calculated as being the difference between the stagnation pressure and the dynamic pressure on the right.

By calculating the difference of the two static pressures $P_{static,\ left}$ - $P_{static,\ right}$ it is possible to evaluate if the nacelle 3 should be turned to the left or to the right.

If the wind blows in a direction as indicated by arrow 24 then $P_{static,\ left}$ will be the same as $P_{static,\ right}$ and no adjustment of the yaw angle is needed. If the wind blows in a direction as indicated by arrow 25 then $P_{static,\ left}$ will be higher than $P_{static,\ right}$ and the nacelle must be turned to the left. If the wind blows in a direction as indicated by arrow 26 then $P_{static,\ left}$ will be lower than $P_{static,\ right}$ and the nacelle must be turned to the right.

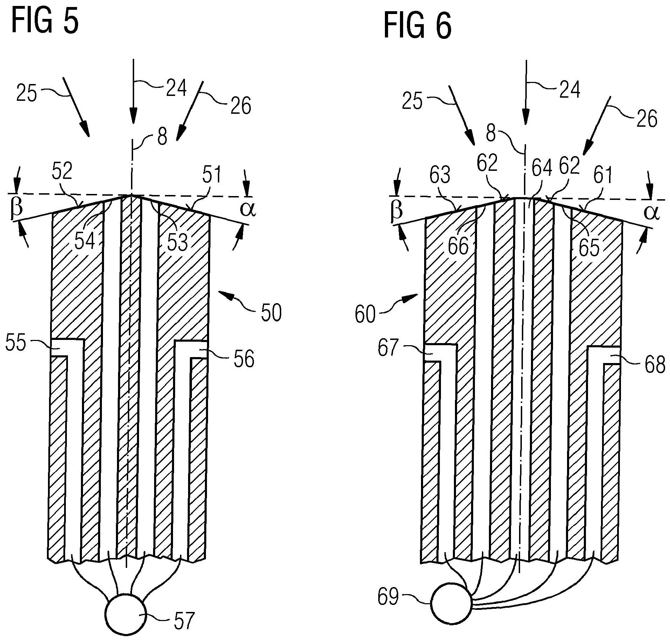

Fig. 5 shows a longitudinal section of a pitot tube 50 according to a third embodiment. As is the case for pitot tube 30 and pitot tube 40 (cf. Figs. 3 and 4) it is not necessary that pitot tube 50 is constructed massively as shown in the section. Pitot tube 50 comprises two stagnation pressure ports 53, 54 and two dynamic pressure ports 55 and 56. All four ports are connected to a manometer 57 by tubes.

Pitot tube 50 may be mounted at a position as pitot tube 20 in the centre of hub 4 or at the position of pitot tube 21 in Fig. 2 off centre. Stagnation pressure ports 53 and 54 are situated at a front end of pitot tube 50. Dynamic pressure port 55 is situated at a side of pitot tube 50. Dynamic pressure port 56 is situated at a side of pitot tube 50 opposite port 55. An opposite side means on the other side of a central axis 8. Port 56 may be situated symmetrically to port 55 with respect to the middle axis 8 of the pitot tube 50.

Ports 53 and 54 are arranged on differently inclined surfaces 51 and 52 of the front end of pitot tube 50. Surface 51 is inclined by an angle $\alpha$ and surface 52 is inclined by an angle $\beta$ to a plane which is perpendicular to axis 8.

As in Figs. 2, 3 and 4, three arrows 24, 25 and 26 indicate possible wind directions. Pitot tube 50 allows measuring a stagnation pressure at the two ports 53 and 54 and a dynamic pressure at each side of the tube at ports 55 and 56. Because of the inclined surfaces 51, 52, ports 53 and 54 do not have the same angle of attack for the wind and do not measure the same stagnation pressure. As long as the angles $\alpha$ and $\beta$ are below about 10°, it can be assumed that stagnation will still occur and a stagnation pressure will be measurable.

Pitot tube 50 will measure the greatest stagnation pressure at port 54 when the wind comes from a direction as indicated by arrow 25 with an angle $\beta$ between the wind direction and pitot tube axis 8, i.e. when the wind is frontal to the inclined surface 52 in which port 54 is situated. In contrast, pitot tube 50 will measure the highest stagnation pressure at port 53 when the wind comes from a direction as indicated by arrow 26 with an angle $\alpha$ between the wind direction and pitot tube axis 8, i.e. when the wind is frontal to the inclined surface 51 in which port 53 is situated. Thus, it can be determined to which side nacelle 3 must be turned simply by comparing the two stagnation pressures at ports 53 and 54. Pitot tube 50 has a larger sensitivity or dynamic response using the stagnation pressure.

Using the dynamic pressure measured at ports 55 and 56 it is possible with pitot tube 50 as well to calculate a difference between two static pressures $P_{static,\ left}$ - $P_{static,\ right}$ as explained for pitot tube 40, using port 54 in combination with port 55 and port 53 in combination with port 56.

Fig. 6 shows a longitudinal section of a pitot tube 60 according to a fourth embodiment. As is the case for pitot tubes 30, 40 and 50 (cf. Figs. 3 to 5) it is not necessary that pitot tube 60 is constructed massively as shown in the section. Pitot tube 60 comprises three stagnation pressure ports 64, 65 and 66 and two dynamic pressure ports 67 and 68. All five ports 64, 65, 66, 67, 68 are connected to a manometer 69 by tubes.

Pitot tube 60 may be mounted at a position as pitot tube 20 in the centre of a hub or at the position of pitot tube 21 in Fig. 2 off centre. Stagnation pressure ports 64, 65 and 66 are situated at a front end of pitot tube 60. Dynamic pressure port 67 is situated at a side of pitot tube 60. Dynamic pressure port 68 is situated at a side of pitot tube 60 opposite port 67. An opposite side means on the other side of a central axis 8. Port 67 may be situated symmetrically to port 68 with respect to the middle axis 8 of pitot tube 60. Stagnation pressure port 64 is arranged at a front end of pitot tube 60 on a surface 62 which is about perpendicular to tube axis 8. Ports 65 and 66 are arranged on differently inclined surfaces 61 and 63 of the front end of pitot tube 60. The surfaces are inclined by an angle $\alpha$ and $\beta$, respectively, to a plane which is perpendicular to the axis 8. Angles $\alpha$ and $\beta$ are below about 10° and stagnation will still occur and a stagnation pressure will be measurable.

Pitot tube 60 has the greatest number of measurement ports and allows the greatest number of different measurements which may be used to refine each other and to enhance the accuracy.

As in Figs. 2, 3, 4 and 5, three arrows 24, 25 and 26 indicate possible wind directions. Pitot tube 60 allows measuring a stagnation pressure at the three ports 64, 65 and 66 and a dynamic pressure at each side of the tube at ports 67 and 68. Because of the differently inclined surfaces 61, 62 and 63, ports 64, 65 and 66 do not have the same angle of attack for the wind and do not measure the same stagnation pressure. The same explications as for pitot tube 50 apply and will not be repeated. With pitot tube 60 it is possible for example to calculate a difference between the pressures measured at ports 64 and 66 and a difference between the pressures measured at ports 64 and 65 and compare these differences for deciding in which direction to turn nacelle 3 for optimising power production.

Using the dynamic pressure measured at ports 67 and 68 it is possible with pitot tube 60 to calculate a difference between two static pressures $P_{static, left}$ - $P_{static, right}$ as explained for pitot tubes 40 and 50.

All described pitot tubes may be used in addition to a conventional wind vane on top of a nacelle to enhance the accuracy of alignment. In this way, the wind vane controls a coarse alignment while the measurements effectuated with the pitot tube will be used for a refinement.

It is to be understood that although we concentrated on the explication of the yaw error detection by comparing stagnation pressures, it is possible with all pitot tubes described to calculate wind velocities using equation (3) and to compare wind velocities.

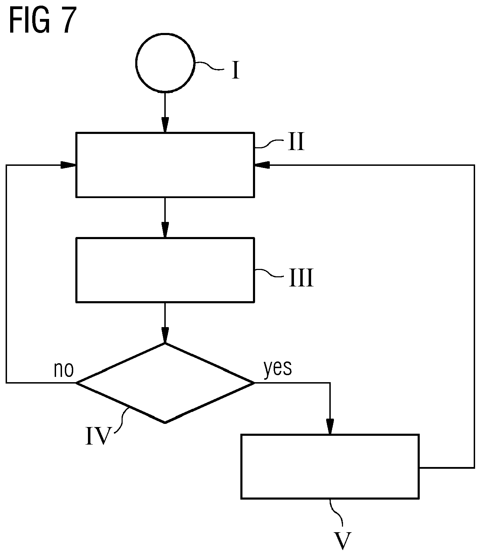

Fig. 7 shows in a flow diagram the steps of a method for adjusting a yaw angle of a nacelle 3 of a wind turbine 1 according to an embodiment of the invention. In a step I a sensor adapted to measure a first stagnation pressure or a first wind velocity is initialized. Calibration may be effectuated, for example to compensate for an off-centre placement of the sensor.

In a step II a first stagnation pressure or/and a first wind velocity at a first position of a front side of a hub 4 of the wind turbine is measured. The measurement may be effectuated while the wind turbine is rotating or when the wind turbine is at a standstill according to the sensor used.

In a step III a second stagnation pressure or/and a second wind velocity is measured at a second position. The second position is different from the first position of the front side of the hub 4. The second position may be different because a second sensor mounted at a second position is used. The second position may also be different for a single sensor, when the sensor is placed off-centre and the wind turbine has rotated. The first and second positions are at a same horizontal plane of the hub, i.e. in a plane which is perpendicular to the rotation axis 9 of nacelle 3 around which the nacelle 3 may be turned by the yaw system 6.

In a step IV a difference between the first and the second stagnation pressure or/and wind velocity is determined. In the case that there is no difference, i.e. when the answer to the question whether the stagnation pressure or/and wind velocity at one of the two positions is greater than at the other position is "no", measuring is continued at step II.

In contrast, when the answer is "yes", a signal is output in step V controlling the yaw actuator to rotate nacelle 3 of the wind turbine 1 in a direction towards the position of the higher stagnation pressure or/and wind velocity.

Rotation may be effectuated by predefined angles or by a yaw angle which is calculated out of the measurement results. Although the present invention has been disclosed in the form of preferred embodiments and variations thereon, it will be understood that numerous additional modifications and variations could be made thereto without departing from the scope of the invention as defined by the appended claims. For the sake of clarity, it is to be understood that the use of "a" or "an" throughout this application does not exclude a plurality, and "comprising" does not exclude other steps or elements. A "unit" can comprise a number of units, unless otherwise stated.

## Claims

1. A yaw error detection sensor which is adapted to be mounted to a wind turbine of a horizontal axis type, wherein the yaw error detection sensor is adapted to measure a stagnation pressure and/or a wind velocity at two different positions along a horizontal plane of the hub (4), **characterized in that** the yaw error detection sensor is adapted to be mounted to a front side of a hub (4) of the wind turbine and comprises a pitot tube (20, 21, 30, 40, 50, 60) with a stagnation pressure port (32, 42, 53, 54, 65, 66) and a dynamic pressure port (33, 43, 44, 55, 56, 67, 68) situated at a side of the pitot tube (20, 21, 30, 40, 50, 60).

2. The sensor of claim 2, wherein the mounted pitot tube (20, 21, 30, 40, 50, 60) is adapted to measure, while a rotor of the wind turbine is rotating.

3. The sensor of claim 1 or claim 2, wherein the mounted pitot tube (40, 50, 60) is adapted to measure at the two different positions during a standstill of the wind turbine.

**4.** The sensor of any of the preceding claims, further comprising an evaluation unit (23) which is adapted to calculate a yaw error out of a comparison of the measured stagnation pressures and/or wind speeds at the two different positions along a horizontal plane of the hub (4).

**5.** The sensor of any of claims 1, 2 or 4, wherein the pitot tube (30) comprises a single stagnation pressure port (32) and a single dynamic pressure port (33).

**6.** The sensor of any of claims 1 to 4, wherein the pitot tube (40) comprises a single stagnation pressure port (42) and two dynamic pressure ports (43, 44) situated at opposite sides of the pitot tube.

**7.** The sensor of any of claims 1 to 4, wherein the pitot tube (50, 60) comprises two stagnation pressure ports (53, 54; 64, 65, 66) arranged on differently inclined surfaces (52, 52; 61, 62, 63) of a front end of the pitot tube and two dynamic pressure ports (55, 56; 67, 68) situated at opposite sides of the pitot tube.

**8.** The sensor of claim 7, wherein the surfaces (51, 52; 61, 63) are inclined by an angle of about 1 to 10 degrees and an angle of about -1 to -10 degrees, respectively, to a plane which is perpendicular to the rotor axis (8).

**9.** The sensor of any of claims 1 to 4, wherein the pitot tube (60) comprises three stagnation pressure ports (64, 65, 66), one of the stagnation pressure ports (64) being situated in the centre of a front end of the pitot tube and the two other stagnation pressure ports (65, 66) being arranged on differently inclined surfaces (61, 63) of the front end of the pitot tube (60), the pitot tube further comprising two dynamic pressure ports (67, 68) situated at opposite sides of the pitot tube.

**10.** A wind turbine of a horizontal axis type comprising a sensor according to any of claims 1 to 9.

**11.** A wind turbine according to claim 10, further comprising a yaw control unit (22) which is adapted to output a control signal for rotating a nacelle (3) of the wind turbine dependent on the yaw error detected.

**12.** A method for adjusting a yaw angle of a nacelle (3) of a wind turbine (1) comprising the following steps:

- measuring a first stagnation pressure and/or a first wind velocity at a first position of a front side of a hub (4) of the wind turbine,
- measuring a second stagnation pressure and/or a second wind velocity at a second position different from the first position of the front side of the hub (4), the first and second positions being at a same horizontal plane of the hub (4), whereby the stagnation pressure and wind velocity are measured using a yaw error detection sensor comprising a pitot tube (20, 21, 30, 40, 50, 60) with a stagnation pressure port (32, 42, 53, 54, 65, 66) and a dynamic pressure port (33, 43, 44, 55, 56, 67, 68) situated at a side of the pitot tube (20, 21, 30, 40, 50, 60); and
- adjusting a yaw angle if a difference between the first and the second stagnation pressure and/or wind velocity is detected by rotating the nacelle (3) of the wind turbine in a direction towards the position of the higher stagnation pressure and/or wind velocity.

**13.** The method of claim 12, wherein the steps of measuring a first stagnation pressure and/or a first wind velocity and a second stagnation pressure and/or a first wind velocity are repeated and the nacelle (3) is rotated by predefined angles each time the difference is detected.

**Patentansprüche**

**1.** Gierfehlererkennungssensor, der so ausgelegt ist, dass er sich an einer Windenergieanlage vom Horizontalachstyp anbringen lässt,
wobei der Gierfehlererkennungssensor so ausgelegt ist, dass er an zwei verschiedenen Positionen in einer horizontalen Ebene der Nabe (4) einen Staudruck und/oder eine Windgeschwindigkeit misst,
**dadurch gekennzeichnet, dass**
der Gierfehlererkennungssensor so ausgelegt ist, dass er sich an einer Vorderseite einer Nabe (4) der Windenergieanlage anbringen lässt, und ein Pitotrohr (20, 21, 30, 40, 50, 60) mit einer Staudrucköffnung (32, 42, 53, 54, 65, 66) und einer Dynamikdrucköffnung (33, 43, 44, 55, 56, 67, 68) an einer Seite des Pitotrohrs (20, 21, 30, 40, 50, 60) umfasst.

**2.** Sensor nach Anspruch 2, wobei das angebrachte Pitotrohr (20, 21, 30, 40, 50, 60) so ausgelegt ist, dass es misst, während sich ein Rotor der Windenergieanlage dreht.

**3.** Sensor nach Anspruch 1 oder 2, wobei das angebrachte Pitotrohr (40, 50, 60) so ausgelegt ist, dass es bei einem Stillstand der Windenergieanlage an den zwei verschiedenen Positionen misst.

**4.** Sensor nach einem der vorhergehenden Ansprüche, der ferner eine Beurteilungseinheit (23) umfasst, die so ausgelegt ist, dass sie anhand eines Vergleichs der an den beiden unterschiedlichen Positionen in einer horizontalen Ebene der Nabe (4) gemessenen Staudrücke und/oder Windgeschwindigkeiten einen Gierfehler berechnet.

**5.** Sensor nach einem der Ansprüche 1, 2 und 4, wobei das Pitotrohr (30) eine einzige Staudrucköffnung (32) und eine einzige Dynamikdrucköffnung (33) umfasst.

**6.** Sensor nach einem der Ansprüche 1 bis 4, wobei das Pitotrohr (40) eine einzige Staudrucköffnung (42) und zwei Dynamikdrucköffnungen (43, 44) an gegenüberliegenden Seiten des Pitotrohrs umfasst.

**7.** Sensor nach einem der Ansprüche 1 bis 4, wobei das Pitotrohr (50, 60) zwei an unterschiedlich geneigten Flächen (52, 52; 61, 62, 63) eines vorderen Endes des Pitotrohrs angeordnete Staudrucköffnungen (53, 54; 64, 65, 66) und zwei an gegenüberliegenden Seiten des Pitotrohrs befindliche Dynamikdrucköffnungen (55, 56; 67, 68) umfasst.

**8.** Sensor nach Anspruch 7, wobei die Flächen (51, 52; 61, 63) in einem Winkel von etwa 1 bis 10 Grad beziehungsweise einem Winkel von -1 bis -10 Grad zu einer senkrecht zur Rotorachse (8) verlaufenden Ebene geneigt sind.

**9.** Sensor nach einem der Ansprüche 1 bis 4, wobei das Pitotrohr (80) drei Staudrucköffnungen (64, 65, 66) umfasst, wobei sich eine der Staudrucköffnungen (64) in der Mitte eines vorderen Endes des Pitotrohrs befindet und die beiden anderen Staudrucköffnungen (65, 66) an unterschiedlich geneigten Flächen (61, 63) des vorderen Endes des Pitotrohrs (60) angeordnet sind, wobei das Pitotrohr ferner zwei Dynamikdrucköffnungen (67, 68) umfasst, die sich an gegenüberliegenden Seiten des Pitotrohrs befinden.

**10.** Windenergieanlage vom Horizontalachstyp mit einem Sensor nach einem der Ansprüche 1 bis 9.

**11.** Windenergieanlage nach Anspruch 10, die ferner eine Giersteuereinheit (22) umfasst, die so ausgelegt ist, dass sie in Abhängigkeit von dem erkannten Gierfehler ein Steuersignal zum Drehen einer Gondel (3) der Windenergieanlage ausgibt.

**12.** Verfahren zum Einstellen eines Gierwinkels einer Gondel (3) einer Windenergieanlage (1) mit folgenden Schritten:

- Messen eines ersten Staudrucks und/oder einer ersten Windgeschwindigkeit an einer ersten Position an einer Vorderseite einer Nabe (4) der Windenergieanlage,
- Messen eines zweiten Staudrucks und/oder einer zweiten Windgeschwindigkeit an einer zweiten Position an der Vorderseite der Nabe (4), die sich von der ersten Position unterscheidet, wobei sich die erste und die zweite Position in der gleichen horizontalen Ebene der Nabe (4) befinden, wobei der Staudruck und die Windgeschwindigkeit unter Verwendung eines Gierfehlererkennungssensors gemessen werden, der ein Pitotrohr (20, 21, 30, 40, 50, 60) mit einer Staudrucköffnung (32, 42, 53, 54, 65, 66) und einer Dynamikdrucköffnung (33, 43, 44, 55, 56, 67, 68) an einer Seite des Pitotrohrs (20, 21, 30, 40, 50, 60) umfasst, und
- Einstellen eines Gierwinkels, wenn eine Differenz zwischen dem ersten und dem zweiten Staudruck und/oder der ersten und der zweiten Windgeschwindigkeit erkannt wird, durch Drehen der Gondel (3) der Windenergieanlage in Richtung zu der Position mit dem höheren Staudruck und/oder der höheren Windgeschwindigkeit hin.

**13.** Verfahren nach Anspruch 12, wobei das Messen eines ersten Staudrucks und/oder einer ersten Windgeschwindigkeit und eines zweiten Staudrucks und/oder einer ersten Windgeschwindigkeit wiederholt und die Gondel (3) jedes Mal, wenn die Differenz erkannt wird, um vorgegebene Winkel gedreht wird.

**Revendications**

**1.** Capteur de détection d'erreur de lacet qui est adapté pour être monté sur une éolienne d'un type à axe horizontal,

dans lequel le capteur de détection d'erreur de lacet est adapté pour mesurer une pression de stagnation et/ou une vitesse du vent au niveau de deux positions différentes le long d'un plan horizontal du moyeu (4),

**caractérisé en ce que**

le capteur de détection d'erreur de lacet est adapté pour être monté sur un côté avant d'un moyeu (4) de l'éolienne et comprend un tube de Pitot (20, 21, 30, 40, 50, 60) avec un orifice de pression de stagnation (32, 42, 53, 54, 65, 66) et un orifice de pression dynamique (33, 43, 44, 55, 56, 67, 68) situés au niveau d'un côté du tube de Pitot (20, 21, 30, 40, 50, 60) .

2. Capteur selon la revendication 2, dans lequel le tube de Pitot monté (20, 21, 30, 40, 50, 60) est adapté pour effectuer une mesure, tandis qu'un rotor de l'éolienne est en rotation.

3. Capteur selon la revendication 1 ou la revendication 2, dans lequel le tube de Pitot monté (40, 50, 60) est adapté pour effectuer une mesure au niveau des deux positions différentes pendant un arrêt de l'éolienne.

4. Capteur selon l'une quelconque des revendications précédentes, comprenant en outre une unité d'évaluation (23) qui est adaptée pour calculer une erreur de lacet à partir d'une comparaison des pressions de stagnation et/ou des vitesses du vent mesurées au niveau des deux positions différentes le long d'un plan horizontal du moyeu (4).

5. Capteur selon l'une quelconque des revendications 1, 2 ou 4, dans lequel le tube de Pitot (30) comprend un orifice de pression de stagnation unique (32) et un orifice de pression dynamique unique (33).

6. Capteur selon l'une quelconque des revendications 1 à 4, dans lequel le tube de Pitot (40) comprend un orifice de pression de stagnation unique (42) et deux orifices de pression dynamique (43, 44) situés au niveau de côtés opposés du tube de Pitot.

7. Capteur selon l'une quelconque des revendications 1 à 4, dans lequel le tube de Pitot (50, 60) comprend deux orifices de pression de stagnation (53, 54 ; 64, 65, 66) agencés sur des surfaces à inclinaison différente (51, 52 ; 61, 62, 63) d'une première extrémité du tube de Pitot et deux orifices de pression dynamique (55, 56 ; 67, 68) situés au niveau de côtés opposés du tube de Pitot.

8. Capteur selon la revendication 7, dans lequel les surfaces (51, 52 ; 61, 63) sont inclinées selon un angle d'environ 1 à 10 degrés et un angle d'environ -1 à -10 degrés, respectivement, par rapport à un plan qui est perpendiculaire à l'axe de rotor (8).

9. Capteur selon l'une quelconque des revendications 1 à 4, dans lequel le tube de Pitot (60) comprend trois orifices de pression de stagnation (64, 65, 66), l'un des orifices de pression de stagnation (64) étant situé au centre d'une extrémité avant du tube de Pitot et les deux autres orifices de pression de stagnation (65, 66) étant agencés sur des surfaces à inclinaison différente (61, 63) de l'extrémité avant du tube de Pitot (60), le tube de Pitot comprenant en outre deux orifices de pression dynamique (67, 68) situés au niveau de côtés opposés du tube de Pitot.

10. Eolienne d'un type à axe horizontal comprenant un capteur selon l'une quelconque des revendications 1 à 9.

11. Eolienne selon la revendication 10, comprenant en outre une unité de commande de lacet (22) qui est adaptée pour délivrer un signal de commande permettant de mettre en rotation une nacelle (3) de l'éolienne en fonction de l'erreur de lacet détectée.

12. Procédé permettant d'ajuster un angle de lacet d'une nacelle (3) d'une éolienne (1) comprenant les étapes suivantes :

- mesurer une première pression de stagnation et/ou une première vitesse du vent au niveau d'une première position d'un côté avant d'un moyeu (4) de l'éolienne,
- mesurer une seconde pression de stagnation et/ou une seconde vitesse du vent au niveau d'une seconde position différente de la première position du côté avant du moyeu (4), les première et seconde positions étant au niveau d'un même plan horizontal du moyeu (4),

moyennant quoi la pression de stagnation et la vitesse du vent sont mesurées à l'aide d'un capteur de détection d'erreur de lacet comprenant un tube de Pitot (20, 21, 30, 40, 50, 60) avec un orifice de pression de stagnation (32, 42, 53, 54, 65, 66) et un orifice de pression dynamique (33, 43, 44, 55, 56, 67, 68) situés au niveau d'un côté du tube de Pitot (20, 21, 30, 40, 50, 60) ; et

- ajuster un angle de lacet si une différence entre la première et la seconde pression de stagnation et/ou la vitesse du vent est détectée en mettant en rotation la nacelle (3) de l'éolienne dans une direction vers la position de la pression de stagnation supérieure et/ou de la vitesse du vent supérieure.

13. Procédé selon la revendication 12, dans lequel les étapes consistant à mesurer une première pression de stagnation et/ou une première vitesse du vent et une seconde pression de stagnation et/ou une première vitesse du vent sont répétées et la nacelle (3) est mise en rotation par des angles prédéfinis chaque fois que la différence est détectée.

## FIG 1     PRIOR ART

FIG 2

FIG 3

FIG 4

# FIG 5

# FIG 6

FIG 7

**EP 2 653 722 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1559910 A1
- EP 2048507 A2
- WO 2005093435 A1
- EP 1288494 A1